# EUROPÄISCHE PATENTSCHRIFT

(11) **EP 0 358 598 B1**
(45) Veröffentlichungstag und Bekanntmachung des Hinweises auf die Patenterteilung: **09.04.1997**
(21) Anmeldenummer: 89730194.1
(22) Anmeldetag: 02.09.1989
(51) Int. Cl.: C08L 101/00, C08K 5/00

(54) **Spritzbare Plastisolzusammensetzung und deren Verwendung zur Schalldämpfung**
Sprayable plastisol composition and its use in sound insulation
Composition de plastisol injectable et son utilisation pour l'insonorisation

(30) Priorität: 07.09.1988 DE 3830345
(43) Veröffentlichungstag der Anmeldung: 14.03.1990
(73) Patentinhaber: Henkel Teroson GmbH, 69123 Heidelberg (DE)
(72) Erfinder: Duck, Edward, Dr., D-6901 Gaiberg (DE); Scheffler, Ingolf, Dr., D-6908 Wiesloch (DE); Ruch, Klaus, Dr., D-6908 Wiesloch 4 (DE)
(74) Vertreter: UEXKÜLL & STOLBERG

(56) Entgegenhaltungen:
- DE-A- 2 756 484
- DE-A- 3 402 016
- US-A- 3 835 116

## Beschreibung

Die Erfindung betrifft spritzbare Plastisolzusammensetzungen und ihre Verwendung zur Schalldämpfung.

Bei der Herstellung von Fahrzeugen, Maschinen und Geräten werden heutzutage fast ausschließlich sehr dünnwandige Bleche eingesetzt. Durch sich mechanisch bewegende Teile oder laufende Motoren werden diese dünnwandigen Bleche unvermeidbar in Schwingungen versetzt und strahlen demzufolge Schall ab. Zur Reduzierung der Schallabstrahlung werden diese Bleche daher insbesondere im Automobilbau und bei der Herstellung von Haushaltsgeräten mit schalldämpfenden Belägen, sogenannten Antidröhnbeschichtungen, versehen.

Nach herkömmlicher Verfahrensweise werden Mischungen aus Füllstoffen mit hohem spezifischen Gewicht und Bitumen zu Folien extrudiert, aus denen dann die entsprechenden Formteile gestanzt oder geschnitten werden. Anschließend werden diese Folien auf die betreffenden Blechteile geklebt, wobei sie gegebenenfalls noch unter Erwärmen an die Form des Bleches angepaßt werden müssen. Obwohl diese Bitumenfolien aufgrund ihres geringen Materialpreises noch häufig Anwendung finden, sind sie sehr spröde und neigen insbesondere bei tiefen Temperaturen zum Abplatzen vom Blech. Auch die vielfach vorgeschlagenen Zusätze von Elastomeren ergeben nur eine geringfügige Verbesserung, die für viele Anwendungen unzureichend ist. Des weiteren ist das Aufbringen der vorgeformten Bitumenteile auf kompliziert geformte oder schwer zugängliche Blechteile von Maschinen oder Fahrzeugen, z.B. die Innenflächen der Hohlräume von Kraftfahrzeugtüren, überhaupt nicht möglich. Als weiterer Nachteil kommt hinzu, daß für ein einziges Fahrzeug oder Gerät in vielen Fällen mehrere Stanzteile benötigt werden, wodurch eine aufwendige Lagerhaltung erforderlich ist.

Es hat daher nicht an Versuchen gefehlt, mit anderen Polymersystemen die Nachteile der Bitumenfolien zu eliminieren. So wurden z.B. Füllstoffe enthaltende wäßrige Polymerdispersionen von Polyvinylacetat oder Ethylen-Vinylacetat-Copolymeren entwickelt, die auf die Blechteile in der notwendigen Belagdicke aufgespritzt werden können. Diese Systeme sind jedoch für die industrielle Verwendung mit hohen Fertigungsstückzahlen nachteilig, da insbesondere bei größeren Belagdicken das Wasser nicht schnell genug aus der aufgespritzten Schicht entfernt werden kann.

Die schalldämpfenden Eigenschaften von Polymerbeschichtungen sind im Bereich der Glasübergangstemperatur des Polymersystems am ausgeprägtesten, da in diesem Temperaturbereich aufgrund der Viskoelastizität des Polymeren die mechanische Energie der Schwingungsvorgänge über molekulare Fließvorgänge in Wärme umgewandelt wird. Herkömmliche spritzbare Beschichtungsmaterialien auf der Basis von PVC-Plastisolen, die z.B. als Unterbodenschutz im Automobilbau in großem Umfang Anwendung finden, weisen im Gebrauchstemperaturbereich von -20 bis +60°C keine nennenswerte schalldämpfende Wirkung auf, da das Maximum des Glasübergangs je nach Weichmacheranteil bei etwa -20°C bis -50°C liegt.

Daher wurden Versuche unternommen, diese herkömmlichen PVC-Plastisole so zu modifizieren, daß sie im Gebrauchstemperaturbereich von -20°C bis +60°C bessere schalldämpfende Eigenschaften aufweisen. Aus der DE-OS 35 14 753 sind Beschichtungen bekannt, die in üblichen PVC-Plastisolen mehrfach ungesättigte Verbindungen, z.B. Di- oder Triacrylate, peroxidische Vernetzer und anorganische Füllstoffe enthalten. Im ausgehärteten Zustand sind derartige Plastisole jedoch glashart und spröde, so daß diese für die Anwendung im Automobilbau wenig geeignet sind, da sie insbesondere bei tiefen Temperaturen keine ausreichende Flexibilität haben. Außerdem weisen diese Formulierungen einen sehr niedrigen Verlustfaktor (tan δ) auf, so daß die schalldämpfende Wirkung nicht sehr ausgeprägt ist.

In der DE-OS 34 44 863 werden Zusammensetzungen beschrieben, die PVC bzw. Vinylchlorid/Vinylacetat-Copolymere, gegebenenfalls Methylmethacrylat-homopolymere oder -copolymere, eine Weichmachermischung und inerte Füllstoffe enthalten. Die Weichmachermischung besteht aus mit dem Methylmethacrylat-Polymeren verträglichen Weichmachern und Weichmachern für die Vinylchlorid-Polymeren, die mit dem gegebenenfalls vorhandenen Methacrylat-Polymeren unverträglich sind. Die so erhaltenen Plastisole weisen gegenüber herkömmlichen PVC-Plastisolen verbesserte schalldämpfende Eigenschaften auf. Insbesondere bei Temperaturen oberhalb von etwa 30°C sinkt die schalldämpfende Wirkung jedoch wieder. Versucht man, durch Variation der Mengenverhältnisse der Einzelkomponenten den Bereich des maximalen Verlustfaktors (tan δ) zu höheren Temperaturen zu verschieben, so nimmt die Kälteflexibilität der Beschichtung sehr stark ab. Eine reduzierte Kälteflexibilität ist aber gerade für eine Anwendung im Fahrzeugbau nachteilig. Außerdem nimmt bei diesen Formulierungen der Verlustfaktor bei niederen Temperaturen sehr stark ab. Derartige Plastisolzusammensetzungen haben also immer nur in einem sehr schmalen Temperaturbereich einen ausreichend hohen Verlustfaktor.

Die US-A-3 835 116 offenbart wasserfreie Vinylhalogenid-Plastisolzusammensetzungen mit einer hohen Fließgrenze und einer geringen Dilatanz. Diese Zusammensetzungen eignen sich bevorzugt als Basis für medizinische Anwendungsformen, wie Salben und Cremes, für Möbelpolituren, Autoreinigungsmittel oder Teppichbeschichtungen. Sie enthalten ein Vinylhalogenid-Homo- oder -Copolymer, einen Weichmacher für das Vinylhalogenidpolymer, ein vernetztes Carboxylpolymer und ein Neutralisierungsmittel. Das vernetzte Carboxylpolymer wird durch die Copolymerisation einer oder mehrerer α,β-ungesättigter Carbonsäuren mit einem Polyalkylpolyether eines mehrwertigen Alkohols erhalten. Derivate der Acrylsäuren sind als α,β-ungesättigte Carbonsäuren bevorzugt. Die in der US-A-3 835 116 beschriebenen Zusammensetzungen sind aufgrund ihrer hohen Viskosität nicht spritzbar.

Der Erfindung liegt demgegenüber die Aufgabe zugrunde, eine spritzbare lagerstabile Plastisolzusammensetzung zur Verfügung zu stellen, mit deren Hilfe Beschichtungen mit schalldämpfenden Eigenschaften im Gebrauchstemperaturbereich von etwa -20 bis etwa +60°C hergestellt werden können. Darüber hinaus sollen die erhaltenen Beschichtungen neben niedrigem spezifischen Gewicht gute Kälteflexibilität und gute Abriebfestigkeit aufweisen, so daß diese auch als Unterbodenschutz mit schalldämpfenden Eigenschaften eingesetzt werden können.

Diese Aufgabe wird erfindungsgemäß durch eine neuartige spritzbare Plastisolzusammensetzung gelöst, welche gekennzeichnet ist durch einen Gehalt an
a) 10 bis 60 Gew.% eines Polymerpulvers mit einer mittleren Teilchengröße von weniger als 60 µm aus einer Mischung von
   i) einer ersten Polymerkomponente, welche nach dem Gelieren des Plastisols die kontinuierliche Phase bildet, und
   ii) einer zweiten schwach vernetzten Polymerkomponente, welche nach dem Gelieren des Plastisols nur angequollen ist und in der kontinuierlichen Phase dispergiert vorliegt,
b) 15 bis 65 Gew.% Weichmacher, welcher die erste Polymerkomponente bei erhöhter Temperatur geliert, die zweite Polymerkomponente aber nur anquillt, und
c) 0 bis 40 Gew.% Füllstoffen.

Die feinverteilte angequollene Polymerphase, die im wesentlichen für die schalldämpfenden Eigenschaften der ausgelierten Beschichtung verantwortlich ist, weist dabei je nach ihrer Zusammensetzung eine oder vorzugsweise mehrere Glasübergangstemperaturen im Bereich von -20 bis +60°C auf. Dahingegen ist die kontinuierliche Phase des weichgemachten PVC-Netzwerkes im wesentlichen für die mechanischen Eigenschaften, wie Abriebfestigkeit, Kälteflexibilität, Härte und Haftung auf dem Untergrund verantwortlich.

In einer bevorzugten Ausführungsform enthält die erfindungsgemäße Plastisolzusammensetzung als erste Polymerkomponente ein Vinylchlorid-Homopolymer oder ein Vinylchlorid/Vinylacetat-Copolymer und als zweite Komponente ein schwach vernetztes, quellfähiges Polymer, welches mit dem verwendeten Weichmacher nicht gelierbar ist, und einen für PVC-Plastisole üblichen Phthalat-Weichmacher. Zusätzlich kann die Zusammensetzung noch die üblichen Füllstoffe, Rheologiehilfsmittel sowie Haftvermittler enthalten. Das schwach vernetzte zweite Polymer liegt nach dem Geliervorgang als diskontinuierliche, fein verteilte, angequollene Phase in dem gelierten PVC-Netzwerk vor. Der Grad der Anquellung, den die diskontinuierliche Polymerphase während der Gelierung der kontinuierlichen Phase durch den Weichmacher erfährt, läßt sich dabei durch den Vernetzungsgrad und die Comonomerzusammensetzung der zweiten Polymerkomponente steuern. Die aufgrund ihrer niedrigen Viskosität bevorzugt luftfrei spritzbaren Plastisolzusammensetzungen zeigen auch bei höheren Lagertemperaturen gute Lagerstabilität und sind zudem frei von flüchtigen Bestandteilen. Mit ihrer Hilfe können abriebfeste Beschichtungen hergestellt werden, die in einem breiten Temperaturbereich schalldämpfende Eigenschaften und eine gute Kälteflexibilität aufweisen.

Bevorzugt werden für die kontinuierliche Polymerphase Dispersionen von Vinylchlorid-Homopolymeren oder Vinylchlorid/Vinylacetat-Copolymeren in Weichmachern eingesetzt. Bevorzugte Weichmacher sind Phthalate wie Dioctylphthalat, Dihexylphthalat, Diethylhexylphthalat und Benzylbutylphthalat. Außerdem können die Phthalsäureester langkettiger linearer oder verzweigter Alkohole oder Alkoholgemische eingesetzt werden. Daneben sind auch andere übliche Weichmacher wie Adipate und Sebacate sowie Phosphate, z.B. Tricresylphosphat, Triphenylphosphat und Tributylphosphat brauchbar. Wesentlich für die Auswahl ist, daß der Weichmacher in der Lage sein muß, die erste Polymerkomponente bei erhöhter Temperatur unter Bildung einer kontinuierlichen Phase zu gelieren, während er die zweite Polymerkomponente nur anquellen, aber nicht gelieren darf, so daß die letztere in der kontinuierlichen Phase dispergiert bleibt.

Für die kontinuierliche Polymerphase eignen sich ferner niedrigviskose Präpolymere mit reaktiven Gruppen, die nach der Spritzapplikation entweder durch Luftfeuchtigkeit oder durch Hitze zu einem flexiblen Elastomer aushärten. Beispiele für derartige Präpolymere sind einkomponentige Polyurethan-Präpolymere mit reaktiven Isocyanaten als feuchtigkeitshärtende Systeme oder einkomponentige Polyurethan-Präpolymere mit blockierten Isocyanaten als wärmehärtende Systeme. Als hitzereaktive Komponente lassen sich ebenfalls hochflexible Präpolymere mit Epoxyendgruppen verwenden. Gegebenenfalls müssen die reaktiven Polymeren mit Weichmachern oder sogenannten Reaktivverdünnern abgemischt werden, um in einen für eine Spritzapplikation geeigneten Viskositätsbereich zu gelangen. Unter Reaktivverdünnern werden dabei schwerflüchtige niedrigviskose Verbindungen verstanden, die über eine funktionelle Gruppe in das Polymersystem eingebaut werden können, ohne daß dessen Flexibilität beeinträchtigt wird. Beispiele für derartige Reaktivverdünner sind monofunktionelle Epoxide, z.B. epoxidierte α-Olefine, Allylglycidylether, Butylglycidylether, Epoxyvinylcyclohexan und Styroloxide. Diese monofunktionellen Epoxide werden zwar überwiegend zur Reaktivverdünnung von Epoxyharzen eingesetzt, bei geeigneter Katalyse können sie jedoch auch in Polyurethansystemen verwendet werden.

Die diskontinuierliche feindispergierte Polymerphase wird durch mindestens ein schwach vernetztes Polymer gebildet, welches aus der Gruppe ausgewählt ist, die aus homo- und copolymeren Estern der Methacrylsäure, insbesondere polymeren Methyl- und/oder Butylmethacrylaten, sowie schwach vernetztem Polystyrol, schwach vernetzten Copolymeren des Styrols mit Acrylnitril, Methylmethacrylat, Acrylamid, Methacrylamid, Acrylsäure, Methacrylsäure oder α-Methylstyrol und/oder Terpolymeren aus Styrol, Acrylnitril, Butadien bzw. Isopren oder α-Methylstyrol besteht. Der Vernetzer ist aus der Gruppe ausgewählt, die aus Divinylbenzol, Butandioldimethacrylat, Triethylenglykoldimethacrylat, niedermolekularen ungesättigten Polyestern und in eingeschränktem Maße Trimethacrylsäureestern des Tri(hydroxymethyl)-propans besteht. Diese schwach vernetzten Polymere werden in an sich bekannter Weise nach den Techniken der Emulsionspolymerisation unter Zusatz von Peroxiden oder Azoverbindungen als Initiatoren hergestellt und in einem nachgeschalteten Sprühtrocknungsverfahren in feinteilige Polymerpulver umgewandelt. Erfindungsgemäß sind dabei solche Polymerpulver geeignet, die eine mittlere Teilchengröße der Sekundäragglomerate nach der Sprühtrocknung von < 60 µm, vorzugsweise von 10 bis 35 µm, aufweisen.

Neben den oben genannten durch radikalische Polymerisation zugängliche Polymeren sind schwach vernetzter epoxidierter Naturkautschuk und andere schwach vernetzte Polymere als die diskontinuierliche Phase bildende zweite Polymerkomponente geeignet, wobei gewährleistet sein muß, daß die Glasübergangstemperatur(en) der diskontinuierlichen angequollenen Polymerphase nach dem Gelier- bzw. Härtungsvorgang der kontinuierlichen Polymerphase im Bereich der gewünschten Gebrauchstemperaturen liegt (en).

Zweckmäßigerweise werden der Vernetzungsgrad und die Comonomerzusammensetzung sowie der Typ des verwendeten Weichmachers aufeinander abgestimmt, da diese Faktoren den Quellungsgrad der dispergierten Polymerphase und damit deren Glasübergangstemperatur(en) und deren akustischen Verlustfaktor (tan δ) beeinflussen. Für Methacrylatcopolymere und Styrolhomo- oder -copolymere erweist sich bei der Verwendung von Phthalatweichmachern ein Anteil von 0,5 bis 10 Mol.% Vernetzer, vorzugsweise 1 bis 5 Mol.%, bezogen auf die Monomer-Mischung, als geeignet.

Zur Auswahl des geeigneten Vernetzungsgrades wird das Pulver des schwach vernetzten Polymeren in dem für die Plastisolzusammensetzung vorgesehenen Weichmacher dispergiert und auf 50°C erwärmt. Dabei darf keine Gelbildung eintreten, doch soll die Viskosität der Zusammensetzung durch Anquellen des Polymerpulvers leicht ansteigen. Durch diesen Test kann der für jeden Weichmacher geeignete Vernetzungsgrad leicht ermittelt werden.

Das Gewichtsverhältnis der die kontinuierliche Phase bildenden ersten Polymerkomponente zu der vernetzten, die diskontinuierliche Phase bildenden zweiten Polymerkomponente kann in einem weiten Bereich von 20:1 bis 1:20, bevorzugt 15:5 bis 5:15, variiert werden. Die zweite Polymerkomponente, die die diskontinuierliche Phase bildet, kann darüber hinaus auch aus einer Mischung verschiedener schwach vernetzter Copolymerer bestehen. Eine derartige Abmischung verschiedener Komponenten ermöglicht es, über einen sehr breiten Temperaturbereich einen ausreichend hohen Verlustfaktor (tan δ) zu erzielen.

Als gegebenenfalls vorhandene Füllstoffe können grundsätzlich alle in der Plastisoltechnologie eingesetzten Materialien, z.B. gemahlene oder gefällte Kreiden, Schwerspat, Gesteinsmehle oder Ruß verwendet werden. Bevorzugt sind Füllstoffe mit niedrigem spezifischen Gewicht, die den dynamischen Elastizitätsmodul (E') der Zusammensetzung stark erhöhen, ohne daß der Verlustfaktor (tan δ) entscheidend erniedrigt wird. Durch ihre Einarbeitung in die erfindungsgemäßen Plastisolzusammensetzungen wird das dynamische Verlustmodul E" vergrößert, welcher durch die Gleichung E" = E' . tan δ gegeben ist und ein Maß für die schalldämpfende Wirkung der Beschichtung darstellt. Ein bevorzugter Füllstoff ist feindisperser Vermiculit, da die Zugabe von Vermiculit als Füllstoff den Temperaturverlauf des Verlustmoduls G" = G' x tan δ günstig beeinflußt und den Temperaturbereich mit ausreichend hohem Verlustmodul signifikant erweitert.

In den erfindungsgemäßen spritzbaren Plastisolzusammensetzungen liegen der Gesamtpolymergehalt im Bereich von 10 bis 60 Gew.%, vorzugsweise bei 20 bis 40 Gew.%, der Weichmacheranteil im Bereich von 15 bis 65 Gew.%, vorzugsweise bei 25 bis 45 Gew.%, und der Füllstoffanteil im Bereich von 0 bis 40 Gew.%, vorzugsweise bei 10 bis 30 Gew.%. Darüber hinaus können diese Mischungen noch übliche Haftvermittler und Rheologiehilfsmittel und andere übliche Zusätze enthalten.

Die erfindungsgemäßen zweiphasigen Polymerzusammensetzungen können zur Erzielung von Schalldämpfung neben der bevorzugten Anwendung in Form von spritzbaren Formulierungen auch in Form von gieß- oder rakelbaren Polymermischungen zur Beschichtung, zum Abdichten oder Verkleben sowie in Form von plattenförmigen im Reaktionsspritzguß-Verfahren hergestellten Materialien verwendet werden.

Die Gelierung der erfindungsgemäßen Plastisolzusammensetzungen erfolgt in der Regel bei Temperaturen im Bereich von 80 bis 230°C, nachdem die Zusammensetzung auf das zu behandelnde Substrat aufgespritzt worden ist, bei dem es sich in der Regel um eine Metall- oder Kunststofffläche handelt.

Die nachfolgenden Beispiele dienen der näheren Erläuterung der Erfindung.

Wo nicht ausdrücklich anders erwähnt, sind die angegebenen Teile und Prozent Gewichtsteile und -prozent.

### Beispiel 1

### Herstellung eines schwach vernetzten Homopolymeren

In einem Planschliffbecher mit Ankerrührer, zwei Tropftrichtern und Rückflußkühler wurden unter einer Stickstoffatmosphäre 27.3 Teile eines Saatlatex mit einer mittleren Teilchengröße von 0,075 µm und einem Festkörpergehalt von 44% in einer Lösung von 0,3 Teilen Isoascorbinsäure und 0,1 Teilen Natriumdodecylsulfat in 264 Teilen Wasser dispergiert. Diese Dispersion wurde auf 70°C aufgeheizt und während der gesamten Polymerisation auf dieser Temperatur gehalten.

Eine Mischung aus 485 Teilen Styrol, 2,47 Molprozent (bezogen auf die Monomermischung) Divinylbenzol sowie eine Lösung von 3,7 Teilen Natriumdodecylsulfat und 1 Teil Isoascorbinsäure in 190 Teilen Waser tropften über einen Zeitraum von 4 Stunden zu. Unmittelbar nach Beginn des Zutropfens wurde 1 Teil t-Butylhydroperoxid zu der Vorlage gegeben. Eine Emulsion aus 50 Teilen Wasser, 0,1 Teilen Natriumdodecylsulfat und 0,6 Teilen t-Butylhydroperoxid wurde bereitet und in drei Inkrementen während der Zulaufphase in die Polymerisationsmischung gegeben.

Nach dem Ende der Zulaufphase wurden weitere 0,3 Teile t-Butylperoxid zur Polymerisationsmischung gegeben, danach wurde die Dispersion noch 2 Stunden lang auf 70°C gehalten und anschließend unter weiterem Rühren auf Raumtemperatur abgekühlt. Die Dispersion hatte einen Festkörpergehalt von 50%. Zur weiteren Verwendung wurde diese Dispersion in einem Sprühtrockner zu einem feinteiligen Pulver mit einem mittleren Teilchendurchmesser von 30 µm getrocknet.

Zur Prüfung auf Lagerstabilität wurden 50 Teile dieses Pulvers in 75 Teilen Dioctylphthalat mit einem schnell laufenden Dissolver dispersiert und danach 30 Minuten lang auf 60°C erwärmt. Die Viskosität der Dispersion stieg durch die Quellung der Polymerpulverteilchen leicht an, war jedoch noch völlig frei fließend, d.h. es ist eine sehr gute Lagerstabilität zu erwarten.

### Beispiel 2

### Herstellung eines schwach vernetzten Copolymeren

Nach der gleichen Methode wie im Beispiel 1 beschrieben wurde eine Mischung aus 422 Teilen Styrol, 50 Teilen Acrylnitril sowie 1.23 Molprozent Triethylenglykoldimethacrylat und 1.39 Molprozent Divinylbenzol polymerisiert und anschließend sprühgetrocknet.

Zur Prüfung auf Lagerstabilität wurde dieses Polymer dem gleichen Test wie in Beispiel 1 unterworfen; die Viskosität stieg stärker an, es ist jedoch eine ausreichende Lagerstabilität zu erwarten.

### Beispiel 3

36 Tiele eines ungesättigten Polyesters aus 43.1 Teilen Propylenglycol, 31.45 Teilen Phthalsäureanhydrid und 25.45 Teilen Maleinsäureandhydrid mit einem mittleren Molekulargewicht von 1700 (GPC) wurden in 464 Teilen Styrol gelöst und analog zu Beispiel 1 emulsionspolymerisiert und anschließend sprühgetrocknet. Der Lagerstabilitätstest ergab ausreichende Resultate.

### Beispiel 4

434 Teile Styrol, 50 Teile Acrylnitril und 2.4 Molprozent Divinylbenzol wurden analog Beispiel 1 emulsionspolymerisiert und anschließend sprühgetrocknet. Der Lagerstabilitätstest ergab sehr gute Resultate.

### Beispiele 5 und 6

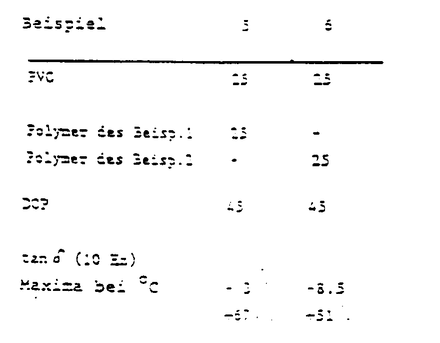

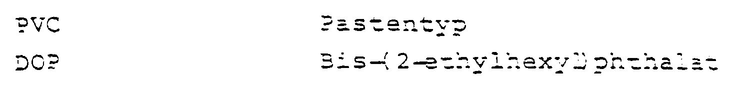

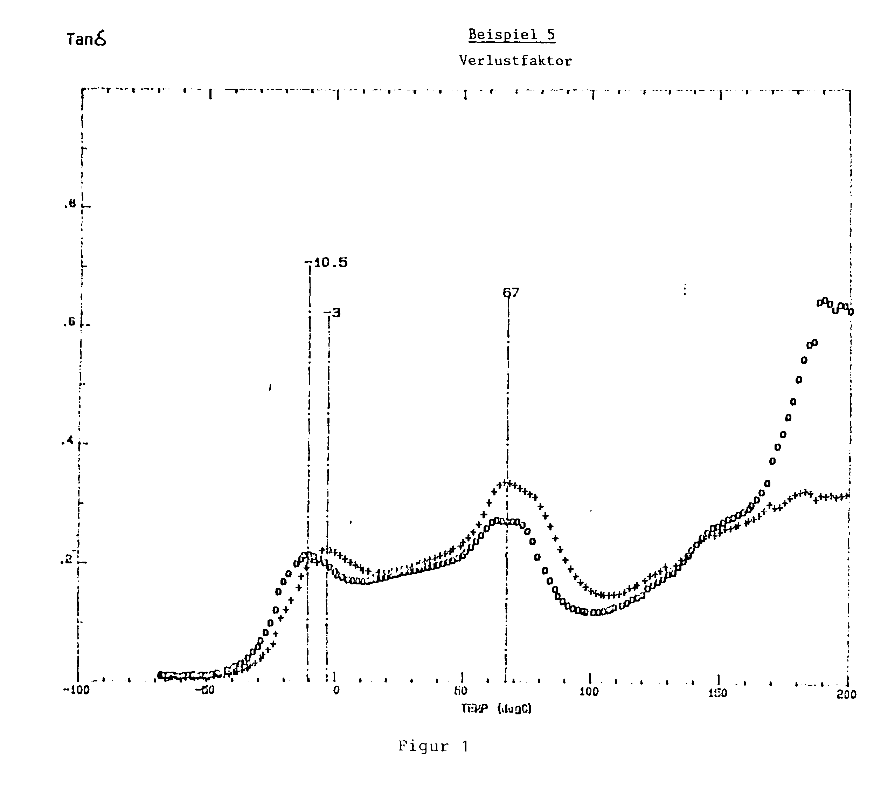

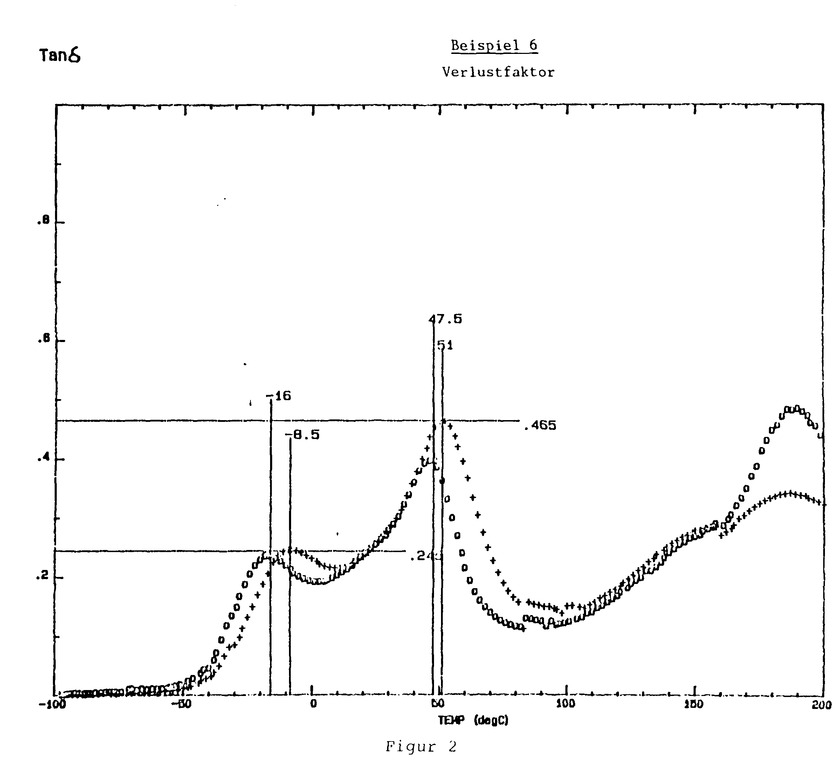

Die Plastisolformulierungen der Beispiele 5 und 6 wurden mit einem Dissolver gemischt, zu 3 mm starken Schichten gerakelt und 30 Minuten lang bei 150°C geliert. Anschließend wurden Scheiben von 11 mm Durchmesser ausgestantzt und der Verlustfaktor wurde in einem Temperaturbereich von -70 bis +100°C mit einem "Dynamic Mechanical Thermo Analizer" der Fa. Polymer Laboratories im "Shear Mode" bestimmt. Der Temperaturverlauf ist in den Figuren 1 und 2 dargestellt.

### Vergleichsbeispiel 1

Mit einem Dissolver wurde folgende Mischung hergestellt:

| | |
|---|---|
| 22,5 Teile | PVC |
| 47,5 Teile | Bis-(2-ethylhexyl)-phthalat |
| 30 Teile | Trimethylolpropantrimethacrylat |
| 1 Teil | t-Butylperoxid |
| 20 Teile | Glimmer |
| 80 Teile | Schwerspat |

Die Mischung wurde zu einer 3 mm dicken Schicht gerakelt und 30 min lang bei 150°C geliert.

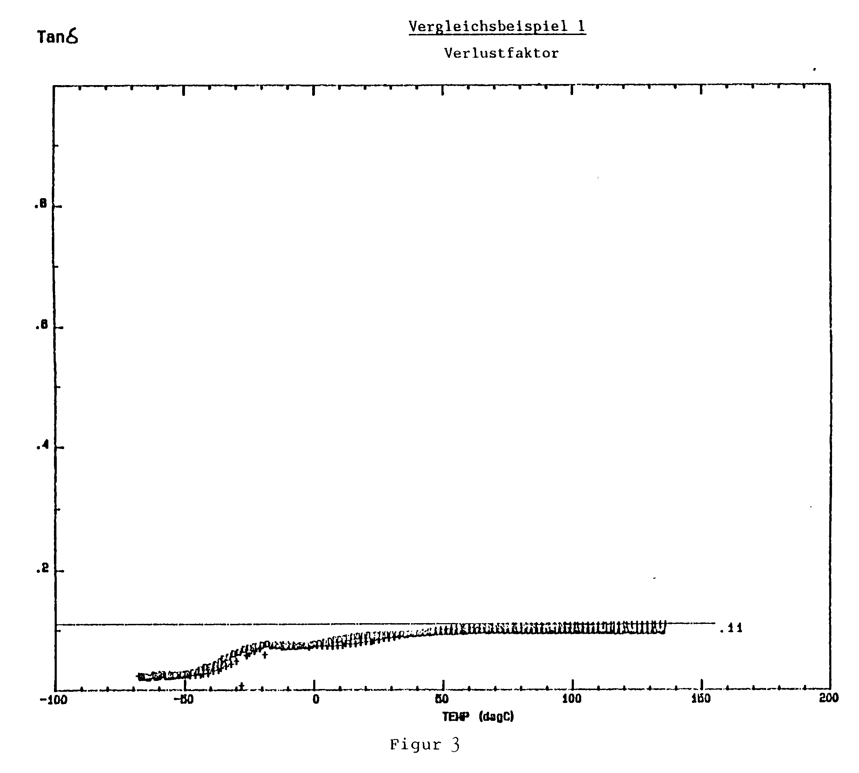

Von dem harten und spröden Material wurden anschließend Scheiben von 11 mm Durchmesser ausgestanzt und mit dem "Dynamic Mechanical Thermo Analyzer" gemessen. Die tan 6 Kurve (Fig. 3) zeigt im geamten Temperaturbereich nur sehr niedrige Werte von ≤ 0,1.

### Vergleichsbeispiel 2

Mit einem Dissolver wurde folgende Mischung hergestellt:

| | |
|---|---|
| 50 Teile | PVC-Suspensions-Copolymerisat mit 12% Vinylacetat, K-Wert 60 |
| 15 Teile | MMA-Copolymer mit 12% Butylmethycrylat (Pastentype) |
| 8 Teile | Bis-(2-ethylhexyl)phthalat |
| 27 Teile | Dibenzyltoluol |

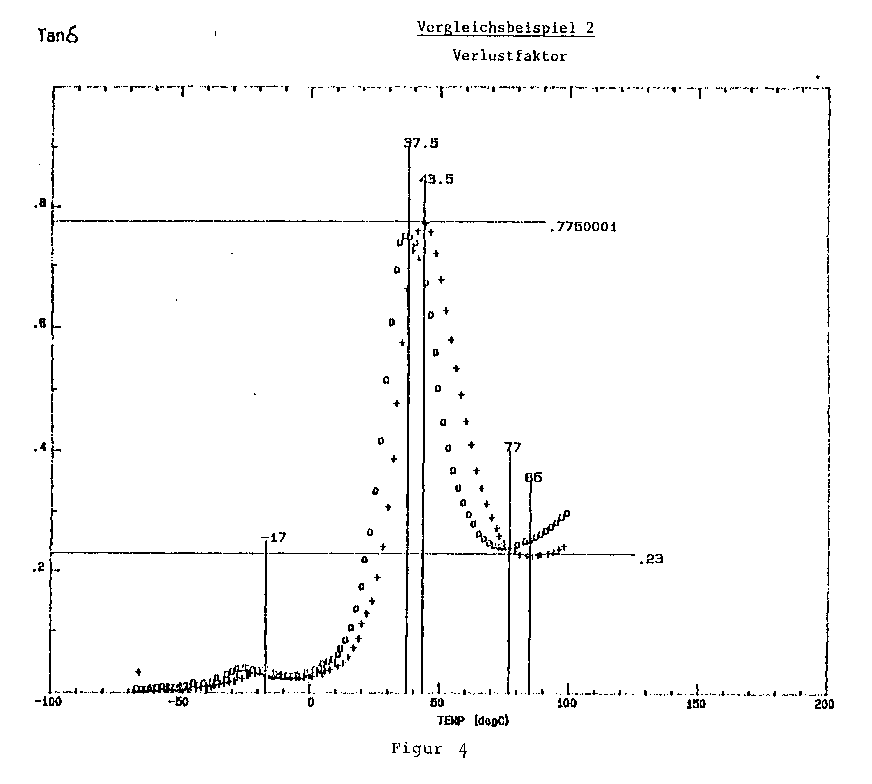

Die Mischung wurde zu einer 3 mm dicken Schicht gerakelt und 30 min lang bei 150°C geliert. Anschließend wurden Scheiben von 11 mm Durchmesser ausgestanzt und mit dem "Dynamic Mechanical Thermo Analyzer" gemessen. Die 10 Hz-tan δ Kurve (Fig. 4) zeigt bei 43,5°C ein hohes Maximum, das bei niedrigen Temperaturen sehr stark abfällt.

Die Beispiele zeigen deutlich, daß es erfindungsgemäß möglich ist, spritzbare Plastisole zu formulieren, die über einen sehr breiten Temperaturbereich einen hohen Verlustfaktor aufweisen und damit für schalldämpfende Beläge geeignet sind.

## Patentansprüche

1. Spritzbare Plastisolzusammensetzung auf der Basis von Pulvern organischer Polymerer und von Weichmacher, gekennzeichnet durch einen Gehalt an
a) 10 bis 60 Gew.-% eines Polymerpulvers mit einer mittleren Teilchengröße von weniger als 60 µm aus einer Mischung von
i) einer ersten Polymerkomponente, welche nach dem Gelieren des Plastisols die kontinuierliche Phase bildet, und
ii) einer zweiten schwach vernetzten Polymerkomponente, welche aus der Gruppe ausgewählt ist, die aus homo- und copolymeren Estern der Methacrylsäure, Polystyrol, Copolymeren des Styrols mit Acrylnitril, Methylmethacrylat, Acrylamid, Methacrylamid, Acrylsäure, Methacrylsäure oder α-Methylstyrol und/oder Terpolymeren aus Styrol, Acrylnitril, Butadien, Isopren oder α-Methylstyrol sowie epoxidiertem Naturkautschuk besteht und wobei der Vernetzer aus der Gruppe ausgewählt ist, die aus Divinylbenzol, Butandioldimethacrylat, Triethylenglykoldimethacrylat, niedermolekularen ungesättigten Polyestern und Trimethacrylatsäureestern des Tri(hydroxymethyl)-propans besteht,
b) 15 bis 65 Gew.-% Weichmacher, welcher die erste Polymerkomponente bei einer Temperatur im Bereich von 80° C bis 230° C geliert, die zweite Polymerkomponente aber nur anquillt, und
c) 0 bis 40 Gew.-% Füllstoffen.

2. Plastisolzusammensetzung nach Anspruch 1, dadurch gekennzeichnet, daß sie als erste Polymerkomponente ein Vinylchlorid-Homopolymer und/oder ein Vinylchlorid/Vinylacetat-Copolymer enthält.

3. Plastisolzusammensetzung nach Anspruch 1, dadurch gekennzeichnet, daß sie als erste Polymerkomponente niedrigviskose Präpolymere mit reaktiven Gruppen enthält, welche unter Einwirkung von Luftfeuchtigkeit und/oder Hitze reagieren.

4. Plastisolzusammensetzung nach einem der Ansprüche 1 bis 3, dadurch gekennzeichnet, daß sie als zweite Polymerkomponente ein schwach vernetztes quellfähiges Polymer enthält, welches nach dem Gelieren ein oder mehrere Glasübergangstemperaturen im Bereich von -20 bis +60°C aufweist.

5. Plastisolzusammensetzung nach einem der Ansprüche 1 bis 4, dadurch gekennzeichnet, daß sie als zweite Polymerkomponente schwach vernetztes homo- und/oder copolymeres Methyl- und/oder Butylmethacrylat enthält.

6. Plastisolzusammensetzung nach einem der Ansprüche 1 bis 5, dadurch gekennzeichnet, daß sie als Weichmacher organische Phthalate enthält.

7. Plastisolzusammensetzung nach einem der Ansprüche 1 bis 6, dadurch gekennzeichnet, daß sie die erste Polymerkomponente und die zweite Polymerkomponente in einem Gewichtsverhältnis von 20:1 bis 1:20 enthält.

8. Verwendung einer Plastisolzusammensetzung gemäß einem der Ansprüche 1 bis 7 zur Herstellung von Beschichtungen mit schalldämpfenden Eigenschaften.

## Claims

1. A sprayable plastisol composition based on powders of organic polymers and on plasticisers, characterised by a content of
a) from 10 to 60 wt.% of a polymer powder having an average particle size of less than 60 µm, consisting of a mixture of
i) a first polymer component, which forms the continuous phase after the gelation of the plastisol, and
ii) a second, slightly cross-linked polymer component selected from the group comprising homopolymeric and copolymeric esters of methacrylic acid, polystyrene, copolymers of styrene and acrylonitrile, methyl methacrylate, acrylamide, methacrylamide, acrylic acid, methacrylic acid or α-methylstyrene and/or terpolymers of styrene, acrylonitrile, butadiene, isoprene or α-methylstyrene as well as epoxidised natural rubber, and wherein the crosslinking agent is selected from the group comprising divinylbenzene, butanediol dimethacrylate, triethylene glycol dimethacrylate, low-molecular unsaturated polyesters and trimethacrylic esters of tri(hydroxymethyl)propane,
b) from 15 to 65 wt.% of plasticiser which gels the first polymer component at a temperature within the range of 80°C to 230°C, but merely swells the second polymer component, and
c) from 0 to 40 wt.% of fillers.

2. Plastisol composition according to claim 1,
characterised in that it contains as the first polymer component a vinyl chloride homopolymer and/or a vinyl chloride/vinyl acetate copolymer.

3. Plastisol composition according to claim 1,
characterised in that it contains as the first polymer component prepolymers of low viscosity having reactive groups which react under the influence of atmospheric moisture and/or heat.

4. Plastisol composition according to one of claims 1 to 3, characterised in that it contains as the second polymer component a slightly cross-linked swellable polymer, which after gelation has one or more glass transition temperatures within the range of -20°C to +60°C.

5. Plastisol composition according to one of claims 1 to 4, characterised in that it contains as the second polymer component slightly cross-linked homopolymeric and/or copolymeric methyl methacrylate and/or butyl methacrylate.

6. Plastisol composition according to one of claims 1 to 5, characterised in that it contains organic phthalates as plasticisers.

7. Plastisol composition according to one of claims 1 to 6, characterised in that it contains the first polymer component and the second polymer component in a weight ratio of from 20:1 to 1:20.

8. The use of a plastisol composition according to one of claims 1 to 7 for the production of coatings having sound-absorbing properties.

## Revendications

1. Composition de plastisol pulvérisable à base de poudres de polymères organiques et de plastifiants,
caractérisée par une teneur de :
a) 10 à 60 % en poids d'une poudre de polymère ayant une taille de particule moyenne inférieure à 60 µm d'un mélange de,
i) un premier composant polymère, qui forme la phase continue après la gélification du plastisol et,
ii) un deuxième composant polymère faiblement réticulé qu'on choisit dans le groupe constitué des esters homo- et copolymères d'acide méthacrylique, du polystyrène, des copolymères du styrène et de l'acrylonitrile, du méthacrylate de méthyle, de l'acrylamide, du méthacrylamide, de l'acide acrylique, de l'acide méthacrylique ou de l'α-méthylstyrène et/ou des terpolymères de styrène, d'acrylonitrile, de butadiène, d'isoprène ou d'α-méthylstyrène ainsi que du caoutchouc naturel époxydé et dans lequel on choisit l'agent réticulant dans le groupe constitué du divinylbenzène, du diméthacrylate de butanediol, du diméthacrylate de triéthylèneglycol, des polyesters insaturés de bas poids moléculaire et des triméthacrylates du tri(hydroxyméthyl)propane,
b) 15 à 65 % en poids de plastifiant, qui gélifie le premier composant de polymère à une température dans le domaine de 80°C à 230°C, mais ne fait gonfler que faiblement le deuxième composant polymère et,
c) 0 à 40 % en poids de charges.

2. Composition de plastisol selon la revendication 1,
caractérisée en ce qu'
elle contient comme premier composant polymère un homopolymère de chlorure de vinyle et/ou un copolymère chlorure de vinyle/acétate de vinyle.

3. Composition de plastisol selon la revendication 1,
caractérisée en ce qu'
elle contient comme premier composant polymère des prépolymères peu visqueux à groupes réactifs, qui réagissent sous l'effet de l'humidité de l'air et/ou de la chaleur.

4. Composition de plastisol selon l'une des revendications 1 à 3,
caractérisée en ce qu'
elle contient comme deuxième composant polymère un polymère faiblement réticulé pouvant gonfler qui, après la gélification, présente une ou plusieurs températures de transition vitreuse dans le domaine de -20 à +60°C.

5. Composition de plastisol selon l'une des revendications 1 à 4,
caractérisée en ce qu'
elle contient comme deuxième composant polymère un homo- et/ou copolymère faiblement réticulé de méthacrylate de méthyle et/ou de butyle.

6. Composition de plastisol selon l'une des revendications 1 à 5,
caractérisée en ce qu'
elle contient comme plastifiants des phtalates organiques.

7. Composition de plastisol selon l'une des revendications 1 à 6,
caractérisée en ce qu'
elle contient le premier composant polymère et le deuxième composant polymère en un rapport pondéral de 20:1 à 1:20.

8. Utilisation d'une composition de plastisol selon l'une des revendications 1 à 7 pour préparer des revêtements à propriétés insonorisantes.
